# EUROPEAN PATENT APPLICATION

(11) **EP 4 843 659 A1**
(43) Date of publication of application: **25.11.2026**
(21) Application number: 25178236.3
(22) Date of filing: 22.05.2025
(51) Int. Cl.: B01D 53/62

(54) **CARBON CAPTURE WITH PH CONTROL**

(71) Applicant: Novozymes A/S, 2880 Bagsvaerd (DK)
(72) Inventor: PETERSEN, Allan, 2880 Bagsvaerd (DK)
(74) Representative: NVS EPO Representatives

(57) **Abstract**

The invention provides an enzymatic carbon dioxide capture process comprising a constant pH, and where carbon dioxide is converted to, and precipitated as, sodium bicarbonate.

## Description

### Reference to a sequence listing

This application contains a Sequence Listing in computer readable form, which is incorporated herein by reference.

### FIELD OF THE INVENTION

The present invention relates to enzymatic carbon dioxide (CO₂) treatment processes comprising a constant pH, where the carbon dioxide is captured and precipitated as sodium bicarbonate or sodium carbonate (soda ash).

### BACKGROUND

Carbonic anhydrase enzymes are well-known for use as catalysts in enzymatic carbon capture processes, as shown in for example WO2012/025577. In such processes, gaseous carbon dioxide is captured in a carbonic anhydrase containing liquid medium, which often also contains high amounts of carbonates and bicarbonates. The carbonic anhydrase acts as a catalyst to establish a chemical equilibrium between carbon dioxide, carbonate and bicarbonate.

The carbon dioxide is captured in an absorber unit, where the liquid medium is contacted with the gaseous carbon dioxide. Subsequently, the liquid medium is often subjected to treatment in a high-temperature stripper unit to release the captured carbon dioxide and regenerate the liquid medium.

The high temperature treatment in the stripper unit is highly challenging for the enzyme stability. Even thermostable carbonic anhydrases will be affected by extended use of high temperatures and will need to be replenished during continuous operation of such carbon capture processes. Thus, a process that avoids use of a high temperature stripper is highly desirous when enzymes are used in carbon capture processes.

### SUMMARY OF THE INVENTION

The present invention provides, in a first aspect, an enzymatic process for treating a carbon dioxide containing gas, comprising:
(a) supplying the carbon dioxide containing gas to an absorber;
(b) contacting the carbon dioxide containing gas in the absorber with an aqueous absorption solution to provide a bicarbonate/carbonate-rich solution and a carbon dioxide depleted gas, where the aqueous absorption solution comprises 10-50% w/w of sodium carbonate, has a pH in the range of pH 8-12.5, preferably pH 8.5-12.5, and comprises 0.0005 g/L to 5 g/L of a carbonic anhydrase;
(c) regenerating the aqueous absorption solution in the absorber by adding sodium hydroxide to the bicarbonate/carbonate-rich solution to maintain a pH in the range of pH 8-12.5, preferably pH 8.5-12.5; and
(d) removing precipitated sodium bicarbonate and/or sodium carbonate from the absorber; wherein the absorber has a unform temperature with a temperature difference of less than 20°C.

Other aspects and embodiments of the invention are apparent from the description and examples.

Unless otherwise indicated, or if it is apparent from the context that something else is meant, all percentages are percentage by weight (% w/w).

### Sequences

SEQ ID NO: 1: Amino acid sequence of a carbonic anhydrase from *Thermovibrio ammonificans*
SEQ ID NO: 2: Amino acid sequence of a variant carbonic anhydrase of SEQ ID NO: 1
SEQ ID NO: 3: Amino acid sequence of a carbonic anhydrase from *Persephonella marina*
SEQ ID NO: 4: Amino acid sequence of a variant carbonic anhydrase of SEQ ID NO: 3

### Definitions

The term "carbonic anhydrase activity" or "CA activity" is defined herein as an EC 4.2.1.1 activity which catalyzes the conversion between carbon dioxide and bicarbonate [CO₂ + H₂O ⇆ HCO₃⁻ + H⁺]. For purposes of the present invention, CA activity is determined according to the procedure described in Example 1. One unit of CA activity is defined after Wilbur [1 U = (1/t_{c})-(1/tᵤ) x 1000] where U is units and t_{c} and tᵤ represent the time in seconds for the catalyzed and uncatalyzed reaction, respectively (Wilbur, 1948, J. Biol. Chem. 176: 147-154). The polypeptides of the present invention are considered to have CA activity if they have at least 20%; preferably at least 40%, at least 50%, at least 60%, at least 70%, at least 80%, at least 90%, or at least 95%; and most preferably at least 100% of the CA activity of the polypeptide consisting of the amino acid sequence of SEQ ID NO: 1 or SEQ ID NO: 3.

The term "CO₂-containing medium" is used to describe any material which contains at least 0.01% CO₂; preferably at least 0.1% CO₂, at least 1% CO₂, at least 5% CO₂, at least 10% CO₂, or at least 20% CO₂; and most preferably at least 50% CO₂. Preferably the CO₂-containing medium has a temperature between 5°C and 110°C; more preferably between 10°C and 100°C, between 20°C and 95°C, between 30 °C and 90°C, between 40°C and 85°C, between 50°C and 80°C, or between 55°C and 75°C; and most preferably between 60°C and 70°C at any pressure. CO₂-containing media are in particular gaseous phases (including gas mixtures), liquids or multiphase mixtures. A CO₂-containing gaseous phase is for example raw natural gas obtainable from oil wells, gas wells, and condensate wells, syngas generated by the gasification of a carbon containing fuel (*e*.*g*., methane) to a gaseous product comprising CO and H₂, or emission streams from combustion processes, *e*.*g*., from carbon based electric generation power plants, or from flue gas stacks from such plants, industrial furnaces, stoves, ovens, or fireplaces or from airplane or car exhausts. A CO₂-containing gaseous phase may alternatively be ambient air (including hot (above 40°C) air, *e*.*g*., desert air), or from respiratory processes in mammals (such as the CO₂-containing gas phase in an artificial lung), living plants and other CO₂ emitting species, in particular from green-houses. A CO₂-containing gas phase may also be off-gas, from aerobic or anaerobic fermentation, such as brewing, fermentation to produce useful products such as ethanol, or the production of biogas. Such fermentation processes can occur at elevated temperatures if they are facilitated by thermophilic microorganisms, which are for example encountered in the production of biogas. A CO₂-containing gaseous phase may alternatively be a gaseous phase enriched in CO₂ for the purpose of use or storage. The above-described gaseous phases may also occur as multiphase mixtures, where the gas co-exists with a certain degree of fluids (*e.g.,* water or other solvents) and/or solid materials (*e.g.,* ash or other particles). CO₂-containing liquids are any solution or fluid, in particular aqueous liquids, containing measurable amounts of CO₂, preferably at one of the levels mentioned above at any pressure. CO₂-containing liquids may be obtained by passing a CO₂-containing gas or solid (*e*.*g*., dry ice or soluble carbonate containing salt) into the liquid. CO₂-containing fluids may also be compressed CO₂ liquid (that contains contaminants, such as dry-cleaning fluid), supercritical CO₂, or CO₂ solvent liquids, like ionic liquids. A CO₂-containing liquid may also be referred to as a "carrier liquid". A CO₂-containing liquid may also include compounds capable of improving the CO₂-containing capacity of the liquid, such as HCO₃⁻ (KHCO₃ or NaHCO₃), CO₃²⁻ (Na₂CO₃ or K₂CO₃), HPO₄²⁻ (K₂HPO₄ or Na₂HPO₄) or MDEA or Tris or NH₃.

The term "CO₂ extraction" is to be understood as a reduction of carbon from a CO₂-containing medium. Such an extraction may be performed from one medium to another, *e*.*g*., gas to liquid, liquid to gas, gas to liquid to gas, liquid to liquid or liquid to solid, but the extraction may also be the conversion of CO₂ to bicarbonate, carbonate or carbonic acid within the same medium or the conversion of bicarbonate to CO₂ within the same medium. The term CO₂ capture is also used to indicate extraction of CO₂ from one medium to another or conversion of CO₂ to bicarbonate/ carbonate or conversion of bicarbonate/carbonate to CO₂.

The term "thermostable" carbonic anhydrase, indicates that the enzyme is functional or active (*i.e.,* can perform catalysis) at an elevated temperature, *i.e.,* above 50°C; preferably above 55°C, above 60°C, above 65°C, above 70°C, above 75°C, above 80°C, above 85°C, or above 90°C; and most preferably above 100°C. In a preferred embodiment the carbonic anhydrase displays optimum activity at one of the temperatures indicated above, *i.e.,* the enzyme's temperature optimum is at one of the temperatures indicated above. The temperature stability of the carbonic anhydrase can be increased to some extent by way of formulation, *e*.*g*., by combination with stabilizing chemicals or by immobilization of the enzyme or by chemical modification, *e*.*g*. cross-linking, to preserve the enzyme in its active three dimensional shape. In order for an enzyme to be considered as thermostable it remains active for at least 15 minutes; preferably for at least 2 hours, for at least 24 hours, for at least 7 days, for at least 10 days, for at least 14 days, or for at least 30 days; and most preferably for at least 50 days at the elevated temperature. Generally, the level of activity is measured using the assay described in Example 2 after incubation for the given time in 1 M NaHCO₃ buffer at pH 8 at the given elevated temperature. The activity may be compared with the enzyme activity prior to the temperature elevation, thereby obtaining the residual activity of the enzyme after the heat treatment. Preferably, the residual activity is at least 50% after the given time at the elevated temperature, more preferably at least 60%, at least 70%, at least 80%, or at least 90%, and most preferably the level of residual activity is at least equal to or unchanged after the given time at the elevated temperature.

For purposes of the present invention, the sequence identity between two amino acid sequences is determined as the output of "longest identity" using the Needleman-Wunsch algorithm (Needleman and Wunsch, 1970, J. Mol. Biol. 48: 443-453) as implemented in the Needle program of the EMBOSS package (EMBOSS: The European Molecular Biology Open Software Suite, Rice et al., 2000, Trends Genet. 16: 276-277), preferably version 6.6.0 or later. The parameters used are a gap open penalty of 10, a gap extension penalty of 0.5, and the EBLOSUM62 (EMBOSS version of BLOSUM62) substitution matrix. In order for the Needle program to report the longest identity, the -nobrief option must be specified in the command line. The output of Needle labeled "longest identity" is calculated as follows:$\left(Identical Residues\times 100\right) / \left(Length of Alignment - Total Number of Gaps in Alignment\right)$

### DETAILED DESCRIPTION

The present invention concerns an enzymatic process for treatment of, or carbon dioxide extraction from, a carbon dioxide (CO₂) containing gas. The carbon dioxide containing gas is contacted with an absorption solution in an absorber/reactor. This is also referred to as "carbon capture" or "carbon capture and storage" ("CCS").

The invention involves the pH dependent equilibrium between carbon dioxide, bicarbonate and carbonate, which is well-known. However, contrary to existing technology, the process of the invention is based on maintaining the absorption solution at a constant pH, or at least within a narrow pH range (and a reasonably constant temperature in the absorber), by continuously supplying sodium hydroxide to the absorber and removing precipitated sodium bicarbonate/carbonate. By continuously adding sodium hydroxide to the process, the absorption solution will get oversaturated with sodium bicarbonate and/or sodium carbonate, depending on the pH, and precipitation will occur.

Carbon dioxide exists as three distinct species in aqueous solution, dissolved CO₂/H₂CO₃, bicarbonate (HCO₃⁻), and carbonate (CO₃²⁻). Compared to the concentration of dissolved CO₂, the concentration of carbonic acid (H₂CO₃) is assumed to be negligible and therefore often ignored. The concentration of the three species is pH dependent with dissolved CO₂ being dominant at low pH, and the CO₃² anion being dominant at high pH, while bicarbonate (HCO₃⁻) is dominant in between the two pH extremes. This is often illustrated using a Bjerrum plot.

During the process of the invention, NaOH is added at a rate that maintains an approximately constant pH in the reaction medium. Hence, the concentration of the three species of CO₂ is determined by choosing and maintaining the pH.

Carbonic anhydrase catalyzes the reaction between dissolved CO₂ and H₂O giving carbonic acid (H₂CO₃). NaOH reacts with H₂CO₃ affording bicarbonate (HCO₃⁻) and water. If the pH is maintained at pH 8-9, the dominant species in solution is bicarbonate (HCO₃⁻). Hence, when the concentration of sodium bicarbonate (NaHCO₃) reaches saturation, it will precipitate if CO₂ and NaOH are continually supplied to the reaction medium.

Similarly, maintaining a pH above 10 will ensure an excess of hydroxide, leading to bicarbonate (HCO₃⁻) reacting with hydroxide to afford carbonate (CO₃²⁻). At even higher pH, the dominant species in solution is carbonate (CO₃²⁻) with none or negligible amounts of bicarbonate (HCO₃⁻) present. Consequently, if CO₂ and NaOH are continually supplied to the reaction medium, the concentration of sodium carbonate (Na₂CO₃) will reach saturation and start to precipitate.

By studying a Bjerrum plot, the proportions of bicarbonate/carbonate at a given pH will become apparent.

The reactions can be summarized as follows:

CO₂ + NaOH → NaHCO₃

NaHCO₃ + NaOH → Na₂CO₃ + H₂O

or

CO₂ + 2NaOH → Na₂CO₃ + H₂O

The pH dependent equilibrium between carbon dioxide, bicarbonate and carbonate is well-known, but existing carbon capture processes have a strong preference for using potassium carbonate/bicarbonate because of a higher water solubility. Such processes extracts carbon dioxide from the absorption solution by using a high temperature treatment (a stripper unit), where the low solubility of carbon dioxide at high temperatures will drive the reaction: 2NaHCO₃ → Na₂CO₃ + CO₂ + H₂O

The high temperatures used to strip carbon dioxide from the absorption solution are, however, detrimental to the stability of carbonic anhydrase enzymes used in enzymatic carbon capture processes. The present invention avoids the use of such high temperatures and significantly improves the enzyme stability and extends the service life of the carbonic anhydrase enzymes.

Further, the precipitated sodium bicarbonate and/or sodium carbonate are not just waste products but provide additional value as raw materials in many industrial uses. If desired, the sodium bicarbonate can even be thermally decomposed (calcination) to provide pure carbon dioxide and sodium carbonate (soda ash).

Thus, the invention provides a simple and efficient enzymatic process for treating a carbon dioxide containing gas, such as a flue gas, biogas, natural gas, or an excipient gas from glass or cement production, comprising:
(a) supplying the carbon dioxide containing gas to an absorber;
(b) contacting the carbon dioxide containing gas in the absorber with an aqueous absorption solution to provide a bicarbonate/carbonate-rich solution and a carbon dioxide depleted gas, where the aqueous absorption solution comprises 10-50% w/w of sodium carbonate, has a pH in the range of pH 8-12.5, preferably pH 8.5-12.5, and comprises 0.0005 g/L to 5 g/L of a carbonic anhydrase;
(c) regenerating the aqueous absorption solution in the absorber by adding sodium hydroxide to the bicarbonate/carbonate-rich solution to maintain a pH in the range of pH 8-12.5, preferably pH 8.5-12.5; and
(d) removing precipitated sodium bicarbonate and/or sodium carbonate from the absorber; wherein the absorber has a uniform temperature with a temperature difference of less than 20°C.

In an embodiment, the aqueous absorption solution in step (b) comprises 10-40% w/w, preferably 10-30% w/w, more preferably 10-20% w/w, of sodium carbonate.

In an embodiment, the aqueous absorption solution in step (b) is saturated with sodium carbonate.

In the context of the invention, the term "bicarbonate/carbonate-rich solution" means a solution comprising a higher concentration of sodium bicarbonate and/or sodium carbonate than the aqueous absorption solution.

In an embodiment, the aqueous absorption solution in step (b), and the regenerated aqueous absorption solution in step (c), has a pH in the range of pH 8-12, preferably a pH in the range of pH 8-11.5, pH 8-11, pH 8-10.5, or pH 8-10. Alternatively, the aqueous absorption solution in step (b) may have a pH in the range of pH 8.5-12, preferably a pH in the range of pH 8.5-11.5, pH 8.5-11, pH 8.5-10.5, or pH 8.5-10.

As mentioned above, the pH of the aqueous absorption solution and the regenerated aqueous absorption solution determines the ratio between sodium bicarbonate and sodium carbonate, which can be derived from a Bjerrum diagram. It will be appreciated that at pH 8-9, the solutions predominantly contain sodium bicarbonate; while at a pH above 10, the solutions predominantly contain sodium carbonate. At pH 9-10, the solutions will contain both sodium bicarbonate and sodium carbonate in varying proportions.

Since sodium bicarbonate has a significantly lower solubility in water than sodium carbonate, sodium bicarbonate may precipitate, even when it is present in much lower amounts than sodium carbonate.

In an embodiment, the pH of the aqueous absorption solution in step (b) and the regenerated aqueous absorption solution in step (c) differ by less than 2 pH units, preferably less than 1 pH unit or less than 0.5 pH units.

In an embodiment, the carbon dioxide containing gas is contacted with the aqueous absorption solution in the absorber in step (b) at a temperature in the range of 20-80°C, preferably in the range of 30-80°C, 40-80°C, or 40-70°C.

In an embodiment, the absorber has a uniform temperature with a temperature difference of less than 15°C, preferably less than 10°C or less than 5°C.

Typically, the absorber is a tall and narrow construction, like a tower, where the aqueous absorption solution is sprayed in small droplets from the top of the construction, and by the force of gravity, moves in countercurrent with the carbon dioxide containing gas to the bottom of the construction.

The precipitated sodium bicarbonate and/or sodium carbonate can be isolated by solid-liquid separation techniques well known in the art, such as filtration, centrifugation, or hydrocyclones.

The process may further comprise contacting the carbon dioxide containing gas with the aqueous absorption solution by using a device for spraying the absorption solution from the top of the absorber/reactor, for example a nozzle, shower head, or similar device, capable of producing small droplets of the absorption solution.

Typically, the flow of the carbon dioxide containing gas is upward in the absorber/reactor, while the flow of the absorption solution is downward. After the first contact between the carbon dioxide containing gas and the absorption solution, the absorption solution may even be pumped back to repeat contacting the carbon dioxide containing gas, in order to increase the contact time and improve the absorption of carbon dioxide.

### Carbonic anhydrase

The carbonic anhydrases used in the process of the invention are catalytic proteins, and the term "active carbonic anhydrase protein" is defined herein as the amount of catalytic protein, which exhibits carbonic anhydrase activity. This can be determined using an activity based analytical enzyme assay (see Example 1). In such assays, the carbonic anhydrase typically catalyzes a reaction generating a colored compound or a color change. The amount of the colored compound can be measured and correlated to the concentration of the active enzyme protein. This technique is well-known in the art.

The aqueous absorption solution used in the process of the invention comprises 0.0005 g/L to 5 g/L of active carbonic anhydrase protein. Preferably the aqueous absorption solution comprises 0.0005 g/L to 5 g/L of active carbonic anhydrase protein, more preferably the aqueous absorption solution comprises 0.0005 g/L to 2 g/L, 0.001 g/L to 5 g/L, 0.001 g/L to 2 g/L, 0.001 g/L to 1 g/L, 0.005 g/L to 2 g/L, 0.005 g/L to 1 g/L, 0.01 g/L to 2 g/L, or 0.01 g/L to 1 g/L of active carbonic anhydrase protein.

Carbonic anhydrase enzymes used in the process of the invention may be any carbonic anhydrase of enzyme class EC 4.2.1.1. Preferably, the carbonic anhydrase is a thermostable carbonic anhydrase; for example, a carbonic anhydrase having at least 50% residual activity after incubation for 15 minutes at 80°C.

In an embodiment, the carbonic anhydrase has an amino acid sequence identity to SEQ ID NO: 1, SEQ ID NO: 2, SEQ ID NO: 3, or SEQ ID NO: 4, of at least 60%, *e*.*g*., at least 65%, at least 70%, at least 75%, at least 80%, at least 85%, at least 90%, at least 91%, at least 92%, at least 93%, at least 94%, at least 95%, at least 96%, at least 97%, at least 98%, at least 99%, or 100%. In one aspect, the carbonic anhydrase amino acid sequence differs by up to 10 amino acids, *e*.*g*., 1, 2, 3, 4, 5, 6, 7, 8, 9, or 10, from the amino acid sequence of SEQ ID NO: 1, SEQ ID NO: 2, SEQ ID NO: 3, or SEQ ID NO: 4.

In a preferred embodiment, the carbonic anhydrase is the *Thermovibrio ammonificans* carbonic anhydrase shown as SEQ ID NO: 1 or the variant thereof shown as SEQ ID NO: 2 (both are described in WO 2016/029316); or the *Persephonella marina* carbonic anhydrase shown as SEQ ID NO: 3 (described in WO 2012/025577) or the variant thereof shown as SEQ ID NO: 4 (described in WO 2024/118901).

Amino acid alterations of carbonic anhydrases, as described above, may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function, such as a poly-histidine tract, an antigenic epitope or a binding module.

Essential amino acids in a polypeptide can be identified according to procedures known in the art, such as site-directed mutagenesis or alanine-scanning mutagenesis (Cunningham and Wells, 1989, Science 244: 1081-1085). In the latter technique, single alanine mutations are introduced at every residue in the molecule, and the resultant molecules are tested for enzyme activity to identify amino acid residues that are critical to the activity of the molecule. See also, Hilton et al., 1996, J. Biol. Chem. 271: 4699-4708. The active site of the enzyme or other biological interaction can also be determined by physical analysis of structure, as determined by such techniques as nuclear magnetic resonance, crystallography, electron diffraction, or photoaffinity labeling, in conjunction with mutation of putative contact site amino acids. See, for example, de Vos et al., 1992, Science 255: 306-312; Smith et al., 1992, J. Mol. Biol. 224: 899-904; Wlodaver et al., 1992, FEBS Lett. 309: 59-64. The identity of essential amino acids can also be inferred from an alignment with a related polypeptide, and/or be inferred from sequence homology and conserved catalytic machinery with a related polypeptide or within a polypeptide or protein family with polypeptides/proteins descending from a common ancestor, typically having similar three-dimensional structures, functions, and significant sequence similarity.

Single or multiple amino acid substitutions, deletions, and/or insertions can be made and tested using known methods of mutagenesis, recombination, and/or shuffling, followed by a relevant screening procedure, such as those disclosed by Reidhaar-Olson and Sauer, 1988, Science 241: 53-57; Bowie and Sauer, 1989, Proc. Natl. Acad. Sci. USA 86: 2152-2156; WO 95/17413; or WO 95/22625. Other methods that can be used include error-prone PCR, CRISPR gene editing, phage display (*e.g.,* Lowman et al., 1991, Biochemistry 30: 10832-10837; US 5,223,409; WO 92/06204), and region-directed mutagenesis (Derbyshire et al., 1986, Gene 46: 145; Ner et al., 1988, DNA 7: 127).
Further embodiments of the invention include:
Embodiment 1. An enzymatic process for treating a carbon dioxide containing gas, comprising:
   (a) supplying the carbon dioxide containing gas to an absorber;
   (b) contacting the carbon dioxide containing gas in the absorber with an aqueous absorption solution to provide a bicarbonate/carbonate-rich solution and a carbon dioxide depleted gas, where the aqueous absorption solution comprises 10-50% w/w of sodium carbonate, has a pH in the range of pH 8-12.5, preferably pH 8.5-12.5, and comprises 0.0005 g/L to 5 g/L of a carbonic anhydrase;
   (c) regenerating the aqueous absorption solution in the absorber by adding sodium hydroxide to the bicarbonate/carbonate-rich solution to maintain a pH in the range of pH 8-12.5; preferably pH 8.5-12.5; and
   (d) removing precipitated sodium bicarbonate and/or sodium carbonate from the absorber; wherein the absorber has a unform temperature with a temperature difference of less than 20°C.
Embodiment 2. The process of the preceding embodiment, wherein step (d) further comprises solid-liquid separation of the precipitated sodium bicarbonate and/or sodium carbonate from the aqueous absorption solution.
Embodiment 3. The process of any of the preceding embodiments, wherein the aqueous absorption solution in step (b) is saturated with sodium carbonate.
Embodiment 4. The process of any of the preceding embodiments, wherein the aqueous absorption solution in step (b) comprises 10-40% w/w of sodium carbonate.
Embodiment 5. The process of any of the preceding embodiments, wherein the aqueous absorption solution in step (b) comprises 10-30% w/w of sodium carbonate.
Embodiment 6. The process of any of the preceding embodiments, wherein the aqueous absorption solution in step (b) comprises 10-20% w/w of sodium carbonate.
Embodiment 7. The process of any of the preceding embodiments, wherein the aqueous absorption solution in step (b) and the regenerated aqueous absorption solution in step (c) have a pH in the range of pH 8-12, such as pH 8.5-12.
Embodiment 8. The process of any of the preceding embodiments, wherein the aqueous absorption solution in step (b) and the regenerated aqueous absorption solution in step (c) have a pH in the range of pH 8-11.5, such as pH 8.5-11.5.
Embodiment 9. The process of any of the preceding embodiments, wherein the aqueous absorption solution in step (b) and the regenerated aqueous absorption solution in step (c) have a pH in the range of pH 8-11, such as pH 8.5-11.
Embodiment 10. The process of any of the preceding embodiments, wherein the aqueous absorption solution in step (b) and the regenerated aqueous absorption solution in step (c) have a pH in the range of pH 8-10.5, such as pH 8.5-10.5.
Embodiment 11. The process of any of the preceding embodiments, wherein the aqueous absorption solution in step (b) and the regenerated aqueous absorption solution in step (c) have a pH in the range of pH 8-10, such as pH 8.5-10.
Embodiment 12. The process of any of the preceding embodiments, wherein the aqueous absorption solution in step (b) and the regenerated aqueous absorption solution in step (c) have a pH in the range of 8-9.5, such as pH 8.5-9.5.
Embodiment 13. The process of any of the preceding embodiments, wherein the pH of the aqueous absorption solution in step (b) and the regenerated aqueous absorption solution in step (c) differs by less than 2 pH units.
Embodiment 14. The process of any of the preceding embodiments, wherein the pH of the aqueous absorption solution in step (b) and the regenerated aqueous absorption solution in step (c) differ by less than 1 pH unit.
Embodiment 15. The process of any of the preceding embodiments, wherein the pH of the aqueous absorption solution in step (b) and the regenerated aqueous absorption solution in step (c) differs by less than 0.5 pH units.
Embodiment 16. The process of any of the preceding embodiments, wherein the aqueous absorption solution in step (b) and the regenerated aqueous absorption solution in step (c) have a pH in the range of pH 8-9, and precipitated sodium bicarbonate is removed from the absorber in step (d).
Embodiment 17. The process of any of the preceding embodiments, wherein the aqueous absorption solution in step (b) and the regenerated aqueous absorption solution in step (c) have a pH in the range of pH 10-12.5, and precipitated sodium carbonate is removed from the absorber in step (d).
Embodiment 18. The process of any of the preceding claims, wherein the aqueous absorption solution in step (b) comprises 0.0005 g/L to 2 g/L of a carbonic anhydrase.
Embodiment 19. The process of any of the preceding claims, wherein the aqueous absorption solution in step (b) comprises 0.001 g/L to 2 g/L of a carbonic anhydrase.
Embodiment 20. The process of any of the preceding claims, wherein the aqueous absorption solution in step (b) comprises 0.001 g/L to 1 g/L of a carbonic anhydrase.
Embodiment 21. The process of any of the preceding claims, wherein the aqueous absorption solution in step (b) comprises 0.005 g/L to 1 g/L of a carbonic anhydrase.
Embodiment 22. The process of any of the preceding claims, wherein the aqueous absorption solution in step (b) comprises 0.01 g/L to 5 g/L, 0.01 g/L to 2 g/L, or 0.01 g/L to 1 g/L of a carbonic anhydrase.
Embodiment 23. The process of any of the preceding embodiments, wherein the carbon dioxide containing gas is contacted with the aqueous absorption solution in the absorber in step (b) at a temperature in the range of 20-80°C.
Embodiment 24. The process of any of the preceding embodiments, wherein the carbon dioxide containing gas is contacted with the aqueous absorption solution in the absorber in step (b) at a temperature in the range of 30-80°C.
Embodiment 25. The process of any of the preceding embodiments, wherein the carbon dioxide containing gas is contacted with the aqueous absorption solution in the absorber in step (b) at a temperature in the range of 40-80°C.
Embodiment 26. The process of any of the preceding embodiments, wherein the carbon dioxide containing gas is contacted with the aqueous absorption solution in the absorber in step (b) at a temperature in the range of 40-70°C.
Embodiment 27. The process of any of the preceding embodiments, wherein the absorber has a unform temperature with a temperature difference of less than 15°C.
Embodiment 28. The process of any of the preceding embodiments, wherein the absorber has a unform temperature with a temperature difference of less than 10°C.
Embodiment 29. The process of any of the preceding embodiments, wherein the absorber has a unform temperature with a temperature difference of less than 5°C.
Embodiment 30. The process of any of the preceding embodiments, wherein the carbon dioxide containing gas is a flue gas, biogas, natural gas, or an excipient gas from cement or glass or steel production.
Embodiment 31. The process of any of the preceding embodiments, wherein the carbonic anhydrase is a thermostable carbonic anhydrase.
Embodiment 32. The process of any of the preceding embodiments, wherein the carbonic anhydrase is a thermostable carbonic anhydrase having at least 50% residual activity after incubation for 15 minutes at 80°C.
Embodiment 33. The process of any of the preceding embodiments, wherein the carbonic anhydrase has at least 60% amino acid sequence identity to any of SEQ ID NO: 1, SEQ ID NO: 2, SEQ ID NO: 3, and SEQ ID NO: 4.
Embodiment 34. The process of any of the preceding embodiments, wherein the carbonic anhydrase has at least 70% amino acid sequence identity to any of SEQ ID NO: 1, SEQ ID NO: 2, SEQ ID NO: 3, and SEQ ID NO: 4.
Embodiment 35. The process of any of the preceding embodiments, wherein the carbonic anhydrase has at least 80% amino acid sequence identity to any of SEQ ID NO: 1, SEQ ID NO: 2, SEQ ID NO: 3, and SEQ ID NO: 4.
Embodiment 36. The process of any of the preceding embodiments, wherein the carbonic anhydrase has at least 90% amino acid sequence identity to any of SEQ ID NO: 1, SEQ ID NO: 2, SEQ ID NO: 3, and SEQ ID NO: 4.
Embodiment 37. The process of any of the preceding embodiments, wherein the carbonic anhydrase has at least 95% amino acid sequence identity to any of SEQ ID NO: 1, SEQ ID NO: 2, SEQ ID NO: 3, and SEQ ID NO: 4.
Embodiment 38. The process of any of the preceding embodiments, wherein the carbonic anhydrase has up to 30 alterations (substitutions, deletions, and/or insertions), preferably up to 25, up to 20, up to 15, up to 10, up to 9, up to 8, up to 7, up to 6, up to 5, up to 4, up to 3, up to 2, or up to 1 alteration(s), as compared to the amino acid sequence of SEQ ID NO: 1, SEQ ID NO: 2, SEQ ID NO: 3, or SEQ ID NO: 4.
Embodiment 39. The process of any of the preceding embodiments, wherein the carbonic anhydrase has up to 30 substitutions, preferably up to 25, up to 20, up to 15, up to 10, up to 9, up to 8, up to 7, up to 6, up to 5, up to 4, up to 3, up to 2, or up to 1 alteration(s), as compared to the amino acid sequence of SEQ ID NO: 1, SEQ ID NO: 2, SEQ ID NO: 3, or SEQ ID NO: 4.
Embodiment 40. The process of any of the preceding embodiments, wherein the carbonic anhydrase has at least 60% amino acid sequence identity to SEQ ID NO: 1 or SEQ ID NO: 3.
Embodiment 41. The process of any of the preceding embodiments, wherein the carbonic anhydrase has at least 70% amino acid sequence identity to SEQ ID NO: 1 or SEQ ID NO: 3.
Embodiment 42. The process of any of the preceding embodiments, wherein the carbonic anhydrase has at least 80% amino acid sequence identity to SEQ ID NO: 1 or SEQ ID NO: 3.
Embodiment 43. The process of any of the preceding embodiments, wherein the carbonic anhydrase has at least 90% amino acid sequence identity to SEQ ID NO: 1 or SEQ ID NO: 3.
Embodiment 44. The process of any of the preceding embodiments, wherein the carbonic anhydrase has at least 95% amino acid sequence identity to SEQ ID NO: 1 or SEQ ID NO: 3.
Embodiment 45. The process of any of the preceding embodiments, wherein the carbonic anhydrase has up to 30 alterations (substitutions, deletions, and/or insertions), preferably up to 25, up to 20, up to 15, up to 10, up to 9, up to 8, up to 7, up to 6, up to 5, up to 4, up to 3, up to 2, or up to 1 alteration(s), as compared to the amino acid sequence of SEQ ID NO: 1 or SEQ ID NO: 3.
Embodiment 46. The process of any of the preceding embodiments, wherein the carbonic anhydrase has up to 30 substitutions, preferably up to 25, up to 20, up to 15, up to 10, up to 9, up to 8, up to 7, up to 6, up to 5, up to 4, up to 3, up to 2, or up to 1 alteration(s), as compared to the amino acid sequence of SEQ ID NO: 1 or SEQ ID NO: 3.

### EXAMPLES

Chemicals were commercial products of at least reagent grade.

### EXAMPLE 1

### Carbonic anhydrase activity

The procedure for measuring carbonic anhydrase activity was described by Wilbur, 1948, J. Biol. Chem. 176: 147-154. The setup is based on the pH change of an assay mixture due to the formation of bicarbonate from carbon dioxide as given in equation 1:

CO₂ + H₂O → HCO₃⁻ + H⁺

The activity assay used in this study was derived from the procedure of Chirica et al., 2001, Biochim. Biophys. Acta 1544(1-2): 55-63. A solution containing approximately 60 to 70 mM CO₂ was prepared by bubbling CO₂ at a flow rate of 100 mL/min into 100 mL distilled water using the tip of a syringe approximately 30 minutes prior to the assay. The CO₂ solution was chilled in an ice water-bath at 0-4°C. To test for the presence of carbonic anhydrase, 2 mL of 25 mM Tris-HCl solution adjusted to pH 8.3 with 25 mM HCl (containing sufficient bromothymol blue to give a distinct and visible blue color) were added to two 13x100 mm test tubes chilled in 4°C water-bath. To one tube, 10 µL of the enzyme containing solution was added, and an equivalent amount of deionized water was added to the second tube to serve as a control. 2 mL of CO₂ solution was added very quickly and smoothly to the bottom of each tube. Simultaneously with the addition of the CO₂ solution, a stopwatch was started. The time required for the solution to change from blue to yellow was recorded (transition point of bromothymol blue is pH 6-7.6). The production of hydrogen ions during the CO₂ hydration reaction lowers the pH of the solution until the color transition point of the bromothymol blue is reached. The time required for the color change is inversely related to the quantity of carbonic anhydrase present in the sample. The tubes must remain immersed in the ice bath for the duration of the assay for results to be reproducible. Typically, the uncatalyzed reaction (the control) takes 40 to 150 seconds for the color change to occur, whereas the enzyme catalyzed reaction is complete between 5 and 20 seconds, depending upon the amount of enzyme protein in the enzyme solution added. Detecting the color change is somewhat subjective but the error for triple measurements was in the range of 0 to 1 sec difference for the catalyzed reaction. One unit is defined after Wilbur [1 U = (1/t_{c})-(1/tᵤ) x 1000] where U is units and t_{c} and tᵤ represent the time in seconds for the catalyzed and uncatalyzed reaction, respectively (Wilbur, 1948, J. Biol. Chem. 176: 147-154). These units are also termed Wilbur-Anderson units (WAU).

The specific activity of the carbonic anhydrase of SEQ ID NO: 3 was determined to about 2 WAU/(mg/L), and the specific activity of the carbonic anhydrase of SEQ ID NO: 4 was determined to 1.1 WAU/(mg/L).

### EXAMPLE 2

### Carbon dioxide capture and sodium bicarbonate precipitation at fixed pH

150 mL carbonate buffer (70 g/L sodium bicarbonate and 16.41 g/L sodium carbonate) was added to a stirred glass beaker. Stirring speed was 600 rpm.

The glass beaker was equipped with a pH stat using 6M sodium hydroxide as titrant. The pH stat was set to maintain pH 8.9.

The glass beaker was also equipped with a carbon dioxide gas nozzle (2 L/min of 100% carbon dioxide), which was placed just above the surface of the carbonate buffer to avoid getting blocked by precipitating sodium bicarbonate.

The initial pH was measured to pH 8.8, and the initial temperature was about 23°C. 375 µL enzyme solution (40 mg/mL of the carbonic anhydrase of SEQ ID NO: 4) was added to the carbonate buffer in the glass beaker to a final enzyme concentration of 0.1 g/L.

The experiment by started by opening the carbon dioxide gas flow and adding the enzyme.

Addition of 25 mL titrant took about 100 minutes, and then the experiment was stopped by closing the gas flow. The temperature was about 27°C at the end of the experiment. No cooling of the glass beaker was applied.

The precipitated sodium bicarbonate was filtered and calcinated at 200°C to yield 6.276 g of sodium carbonate. This corresponds to 0.118 moles of sodium bicarbonate.

Despite the poor contact between the carbonate buffer and the carbon dioxide gas stream, about 94% of the added sodium hydroxide was captured in the precipitated sodium bicarbonate, which demonstrates a highly efficient process.

## Claims

1. An enzymatic process for treating a carbon dioxide containing gas, comprising:
(a) supplying the carbon dioxide containing gas to an absorber;
(b) contacting the carbon dioxide containing gas in the absorber with an aqueous absorption solution to provide a bicarbonate/carbonate-rich solution and a carbon dioxide depleted gas, where the aqueous absorption solution comprises 10-50% w/w of sodium carbonate, has a pH in the range of pH 8-12.5, preferably pH 8.5-12.5, and comprises 0.0005 g/L to 5 g/L of a carbonic anhydrase;
(c) regenerating the aqueous absorption solution in the absorber by adding sodium hydroxide to the bicarbonate/carbonate-rich solution to maintain a pH in the range of pH 8-12.5, preferably pH 8.5-12.5; and
(d) removing precipitated sodium bicarbonate and/or sodium carbonate from the absorber; wherein the absorber has a uniform temperature with a temperature difference of less than 20°C.

2. The process of the preceding claim, wherein step (d) further comprises solid-liquid separation of the precipitated sodium bicarbonate and/or sodium carbonate from the aqueous absorption solution.

3. The process of any of the preceding claims, wherein the aqueous absorption solution in step (b) comprises 10-40% w/w, preferably 10-30% w/w, or 10-20% w/w of sodium carbonate.

4. The process of any of the preceding claims, wherein the aqueous absorption solution in step (b) has a pH in the range of pH 8-12, preferably pH 8.5-12, pH 8-11.5, pH 8.5-11.5, pH 8-11, or pH 8.5-11.

5. The process of any of the preceding claims, where the aqueous absorption solution in step (b) comprises 0.001 g/L to 5 g/L, preferably 0.01 g/L to 5 g/L of a carbonic anhydrase; or 0.0005 to 2 g/L, preferably 0.001 g/L to 2 g/L, or 0.01 g/L to 2 g/L of a carbonic anhydrase.

6. The process of any of the preceding claims, wherein the carbon dioxide containing gas in step (b) is contacted with the aqueous absorption solution in the absorber at a temperature in the range of 20-80°C, preferably in the range of 30-80°C, 40-80°C, or 40-70°C.

7. The process of any of the preceding claims, wherein the absorber has a unform temperature with a temperature difference of less than 15°C, preferably less than 10°C or less than 5°C.

8. The process of any of the preceding claims, wherein the pH of the aqueous absorption solution in step (b) and the regenerated aqueous absorption solution in step (c) differ by less than 2 pH units, preferably less than 1 pH unit or less than 0.5 pH units.

9. The process of any of the preceding claims, wherein the carbonic anhydrase is a thermostable carbonic anhydrase; preferably having at least 50% residual activity after incubation for 15 minutes at 80°C.

10. The process of any of the preceding claims, wherein the carbonic anhydrase has at least 80% amino acid sequence identity to any of SEQ ID NO: 1, SEQ ID NO: 2, SEQ ID NO: 3, and SEQ ID NO: 4; preferably at least 90% or 95% amino acid sequence identity to any of SEQ ID NO: 1, SEQ ID NO: 2, SEQ ID NO: 3, and SEQ ID NO: 4.

11. The process of any of the preceding claims, wherein the carbon dioxide containing gas is a flue gas, a biogas, a natural gas, or an excipient from cement or glass production.
